(19) **Europäisches Patentamt**

**European Patent Office**

**Office européen des brevets**

(11) **EP 0 950 812 B1**

(12) **EUROPEAN PATENT SPECIFICATION**

(45) Date of publication and mention
of the grant of the patent:
**09.07.2003 Bulletin 2003/28**

(51) Int Cl.$^7$: **F03B 13/14**

(21) Application number: **99302807.5**

(22) Date of filing: **12.04.1999**

(54) **Wave energy absorber of the oscillating water column type**

Wellenenergieabsorber nach dem Prinzip der schwingenden Wassersäule

Dispositif d'exploitation de l'énergie des vagues à colonne d'eau oscillante

(84) Designated Contracting States:
**DK GB GR IE**

(30) Priority: **10.04.1998 JP 9975498**

(43) Date of publication of application:
**20.10.1999 Bulletin 1999/42**

(73) Proprietors:
• **Masuda, Yoshio**
**Yokosuka-shi, Kanagawa 237-0066 (JP)**
• **Kuboki, Toshiari**
**Tokyo 116-0003 (JP)**

(72) Inventors:
• **Masuda, Yoshio**
**Yokosuka-shi, Kanagawa 237-0066 (JP)**
• **Kuboki, Toshiari**
**Tokyo 116-0003 (JP)**

(74) Representative: **Mohun, Stephen John**
**Haseltine Lake & Co.,**
**Imperial House,**
**15-19 Kingsway**
**London WC2B 6UD (GB)**

(56) References cited:
**US-A- 4 741 157          US-A- 4 858 434**

• **MASUDA Y: "Improvement of Economy of Wave Power Generation by Backward Bent Duct Buoy" OCEAN TECHNOLOGIES AND OPPORTUNITIES IN THE PACIFIC FOR THE 90'S. HONOLULU, OCT. 1 - 3, 1991, PROCEEDINGS OF THE OCEAN ENGINEERING IN THE ENVIRONMENT CONFERENCE. (OCEANS), NEW YORK, IEEE, US, vol. 3, 1 October 1991 (1991-10-01), pages 216-223, XP010053450 ISBN: 0-7803-0202-8**
• **MASUDA Y ET AL: "THE BACKWARD BENT DUCT BUOY - AN IMPROVED FLOATING TYPE WAVE POWER DEVICE" PARTNERSHIP OF MARINE INTERESTS. BALTIMORE, OCT. 31 - NOV. 2, 1988, PROCEEDINGS OF THE OCEANS CONFERENCE, NEW YORK, IEEE, US, vol. 3 CONF. 13, 31 October 1988 (1988-10-31), pages 1067-1072, XP000044783**
• **PATENT ABSTRACTS OF JAPAN vol. 014, no. 019 (M-919), 16 January 1990 (1990-01-16) & JP 01 261175 A (MITSUBISHI ELECTRIC CORP), 18 October 1989 (1989-10-18)**
• **PATENT ABSTRACTS OF JAPAN vol. 2000, no. 18, 5 June 2001 (2001-06-05) & JP 01 046569 A (ISEKI & CO LTD), 21 February 1989 (1989-02-21)**

EP 0 950 812 B1

**Description**

The Present invention refers to a wave power electric generator, and more in detail, to a mooring type high performance wave power generating apparatus, which generates economical electric power for use in an island or on shore from wave power.

US 4,741,157 discloses a wave-activated power generating apparatus, which includes a generally L-shaped duct including a vertically extending portion and a horizontally extending portion in fluidic communication, and a floatable main body fixedly attached to the duct. The horizontally extending portion has an open rear end which is submerged underwater in the normal operating condition.

Paper XP-010053450 discloses a power generating apparatus having an L-shaped duct, with vertically and horizontally extending portions, with a floatable body fixedly attached thereto. A turbine and a generator are attached to the vertically extending portion.

As a small floating type wave power generating apparatus, numbers of center pipe buoys for navigational use were put to practical use. And a large wave power generating apparatus, a ship shape [KAIMEI] (80m x 12m x 5.35m) attenuator type generator was tested on an offshore of Yura, Yamagata Perfecture, Japan, by the Japanese Marine Science and Technology center.

The floating type wave power generating apparatus is easy to construct as compared to a shore fixed type wave power generating apparatus. And wave power in offshore is higher than that in near shore. But, conversion efficiency from wave power to air output of KAIMEI was low. Therefore a floating type new wave power generating apparatus of higher conversion efficiency has been desired. In order to answer this desire, what is called a Backward Bent Duct Buoy (BBDB) was invented.

The BBDB comprises a vertically extended air chamber that has a generating apparatus inside and a horizontally extending duct in fluid communication having an open rear end. In the above mentioned prior technology, total length of the horizontal duct and the length of the air chamber is about 0.3-0.4 times of a wave length of a most frequent wave in the candidate sea. The BBDB is moored on sea with a chain attached to a curved portion of the duct. A box shaped float is fixed on the horizontal duct at the rear position of the air chamber. The bottom surface of the horizontal duct is curved by half rounded shape to decrease dumping loss of pitching motion of the BBDB with high performance.

Some of the problems in designing practically useful wave generating apparatus are as follows.

(1) As the wave power distributes in wide wave periods, in order to use it effectively, a useable wave period range of a wave power generating apparatus must be wide enough, and the conversion efficiency must be high enough.

(2) The floating type wave generating apparatus has a capability to mitigate wave's impacting force by moving by the wave, but a mooring apparatus must be improved to keep the apparatus safely for any wave conditions, including conditions in near shore where the wave turns to perpendicular direction against shoreline.

(3) As a turbine for wave power, an impulse turbine with 4 valves or 1 valve was used for [ KAIMEI] test etc, but in the recent years, a non-valve Wells turbine was adopted for most of the wave power use. In the United Kingdom leading part-was taken in this Wells turbine development, but there is a stall problem which decreases efficiency of the Wells turbine in high wave condition. Thus, a new turbine system has been desired to keep high efficiency in wide bandwidth of wave period as well as in wide range of wave height.

(4) An output of the wave power generating apparatus has a difficulty to keep a constant cycle and a constant voltage by wave's characteristic of alternation. This is a reason for the wave power generating apparatus not to be employed in long time. In order to solve this problem, a wound type induction generator with a resister and a capacitor was studied.

(5) In order to generate a high power from the wave, a terminator type wave power generating apparatus is adopted to use wide wave power distributed on sea, instead of an attenuator type wave power generating apparatus which utilizes a narrow wave power of the width of the buoy.

Embodiments of the present invention aim to provide a floating type wave power generating apparatus, which addresses the above-mentioned (1)-(5)problems.

The invention is defined in the attached independent claims, to which reference should now be made.

Improved technology provides of an upright extended air chamber, arranged to be substantially vertical in use, connected with a laterally extended duct, arranged to be substantially horizontal in use, having an open rear end. A float is fixedly attached on the horizontal duct. As a special feature of the present invention the float is composed of a vertical square pillar and a vertical rear half cylinder attached to the vertical square pillar. The so called backward bent duct buoy (BBDB) consists essentially of a vertically extended air chamber and, at the bottom thereof, a fluidic communicated horizontal duct connected with a smooth bent duct.

The present inventive floating type wave power electric generating apparatus may extend the width of useable wave period and can get a higher conversion efficiency according to an adopting float shape combined with a vertical square pillar and a vertical half cylinder attached thereto (total length/width = 1.5). This float shape is the first feature of the present invention.

A first inventive wave power generating apparatus comprises : a L-shaped duct comprising an upright extending duct fluidly connected with a laterally extending duct having an open rear end, a turbine and an electric power generator on an air chamber located on the upright extending ducts, mooring front and rear chains, and a float fixedly attached to said L-shaped duct, characterised in that the float comprises, in one body, an upright square pillar and an upright rear half cylinder.

Further, preferred features of the invention may be found in the sub-claims.

In addition, the horizontal duct is extended further from the end of the float about 0.4 - 0.6 times of the width of the air chamber, which improves conversion efficiency and useable wave period. When the further extended length is shorter than 0.4 or longer than 0.6 times of the width of the air chamber, the increase of useable wave period band and the improvement of efficiency become ineffective. Best performance is obtained at the further extended length of about 0.5 times of the width of the air chamber.

The inventive floating type wave power generating apparatus is better to be-moored with mooring lines which are more than two lines at the minimum, which have a float or floats in the middle of the mooring line to give elastic characteristics between the sea bottom and the floating type wave power generating apparatus. It is usual so far to be moored with a longer chain line, the length of which is over than 6 times of the water depth. Comparing to this, according to the present invention the length of a mooring line may be decreased significantly from 6 to 2 times of the water depth. As this technical method increases numbers of wave power generating apparatus per shore line length, it will be useful to improve economy of wave power electric- generation.

The inventive wave power electric generating apparatus may produce frontward pushing force by oscillating water motions in the L-shaped duct, according to the direction change of 90 degrees by a bent duct. The water motion in the L-shaped duct produces frontward pushing force by the return trip of water motion in the duct. The decrease in mooring force effects is excellent in the present invention. Such function can not be obtained with other wave power generators or floating bodies. In addition, an open and close automatic valve is equipped at the exit of the air chamber. When it closes the exit, the mooring force is decreased significantly in very high sea, and of course the output is decreased for safety of the machine.

There are two different floating type wave power generating apparatus. One is an attenuator which follows to the wave direction, and the other is a terminator, the long buoy of which follows to perpendicular to the wave direction. An attenuator means in this description a long slender float like as ship shape device whose alignment is parallel to the wave direction, while a terminator means a wide float arranged with a large numbers of devices to align themselves parallel to wave crest.

In the attenuator, the front of the buoy receives the wave pushing force in the rear direction, and the other hand, a water column in the horizontal duct moves in the same direction to wave, and in the opposite direction to wave, the water motion is changed in the direction through the bent duct, and frontward pushing force is produced. This force cancels wave force by wave to rear. And the open and close valve in the exit of the air chamber may decrease the mooring force in very high sea. Combination of the L-shaped duct and the open and close valve can decrease the mooring force significantly, and safety mooring has a good chance of realization.

Further, the present invention includes an impulse turbine with open and close valves. The turbine has guide vanes in both side of the rotor. The guide vanes are driven by air current to rotate the turbine in the same direction. The turbine employed is called a Setoguchi turbine. The turbine rotates a wound type induction generator's rotor. Electric three phase output is transmitted to grid line through flexible cable, a three phase inner rotor's circuit is controlled by a resistor, a capacitor and an induction coil through slip rings. The output to grid line is changed to a constant cycle and a constant voltage. The open and close valve controls air flow from the air chamber. The valve is controlled by a servo motor through a battery.

A wound type induction generator with a resistor, a capacitor and an induction coil may generate a constant cycle and a constant voltage electricity to be supplied to the grid line. A Wells turbine is not used to avoid a stall problem in a high wave condition.

By adopting a wound type induction generator controlled by a resistor, a capacitor and an inductor coil, the constant cycle as well as the constant voltage is obtained. Such electric power is transmitted to a grid line on the land.

At first, the backward bent duct buoy (BBDB) was mainly adopted for an attenuator. The attenuator has a weak point of small wave power which is limited by small attenuator width, and so the generating output is not so high.

In order to improve the defects, a terminator shape wave power generating apparatus is adopted in the present invention. A technical problem of the terminator needs to endure high mooring force by receiving wave impact force of very wide width, but this backward bent duct buoy ( BBDB) can decrease mooring force by combination of the L-shaped duct, the open-close valve at the outlet of the air chamber, and mid floats attached to the mooring chains. Therefore, the terminator shape BBDB becomes in practice to get high power output with small mooring force.

Embodiments of the present invention will now be described, by way of example only, with reference to the accompanying drawings, in which:

Fig.1 is a general perspective view of an embodiment of the inventive apparatus showing a practical use .

Fig.2 is a graph to show relations between wave period and specific pressure ratio.

Fig.3 is a perspective view of a BBDB test model which has a float composed of a front vertical rectangle pillar (width : length = 2 : 1) and a rear half cylinder.

Fig.4 is a chart that shows data of sea test in Mikawa Bay of a BBDB model shown in Fig.3.

Fig.5 is a graph of an air output record of a BBDB (24Kg) of a BBDB model shown in Fig.3.

Fig.6 is a graph of an air output record of BBDB (27Kg) of a BBDB model shown in Fig.3.

Fig.7 is a graph of air output record of BBDB (30Kg) of a BBDB model shown in Fig.3.

Fig.8 is three dimensional views of a BBDB to show the dimensions.

Fig.9 is a graph of an air output of a BBDB (24Kg).

Fig.10 is three dimensional views of a BBDB to show the dimension.

Fig.11 is a graph of an air output of a BBDB (27 Kg).

Fig.12 is three dimensional views of a BBDB to show the dimension.

Fig.13 is an air output comparison graph between BBDBs of Figs.11 and 9.

Fig.14 is a drawing of three dimensional views of a BBDB which has a float composed of a front vertical square pillar and a rear half cylinder.

Fig.15 is an air output comparison graph by difference of extended duct's length.

Fig.16 is a side view to explain a function of frontward thrust force of a backward bent duct.

Fig.17 is a graph showing relations between the wave height and the maximum mooring force.

Fig.18 is a graph showing relations between wave period and the maximum mooring force.

Fig.19 is an explanatory view of an impulse turbine (Setoguchi turbine).

Fig.20 is a graph of a relation between the L/h and the mooring force.

Fig.21 is a graph of a relation between the nozzle throttle ratio and the maximum mooring force.

Fig.22 is a schematic view showing a wound type induction generator, a Setoguchi turbine, and a controller for a generator and a turbine.

Fig.23 is a perspective view of a prior backward bent duct buoy.

Fig.24 is a prior single fuselage BBDB with a cylinder shape float.

Fig.25 is a perspective view of a prior practical twin fuselage BBDB.

Fig.26 is a perspective view of an example of a BBDB with a vertical cylinder float.

Fig.27 is a perspective view of a BBDB with a float composed of a front vertical rectangle pillar and a rear half cylinder.

Fig.28 is a shape explanation view of a front square float and a rear half cylinder float.

Fig.29 is a perspective view of a terminator type BBDB.

Fig.30 is an explanatory view of changing of wave directions and wave ridges near a shore line, and

Fig.31 is a perspective view showing a mooring system using 4-5 short chain lines for an attenuator BBDB.

At first prior technologies will be described in detail following drawings.

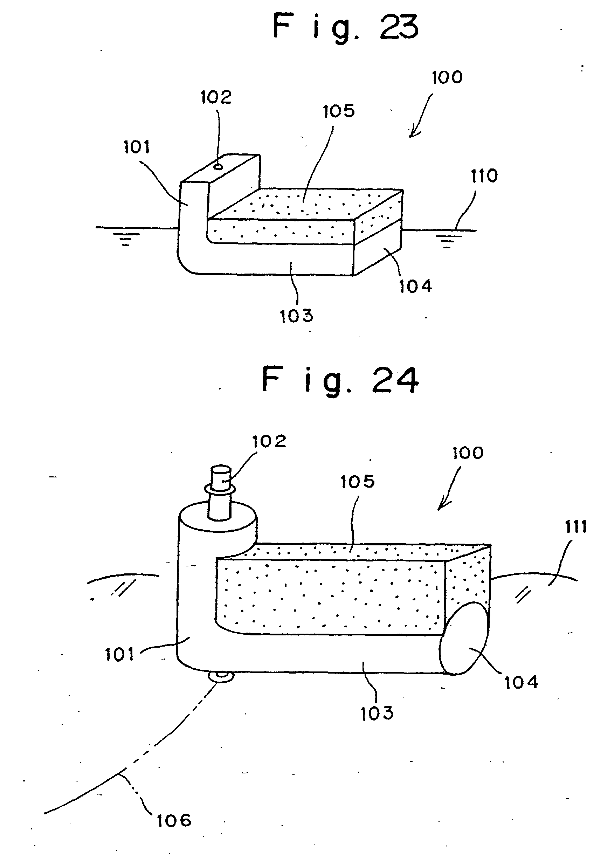

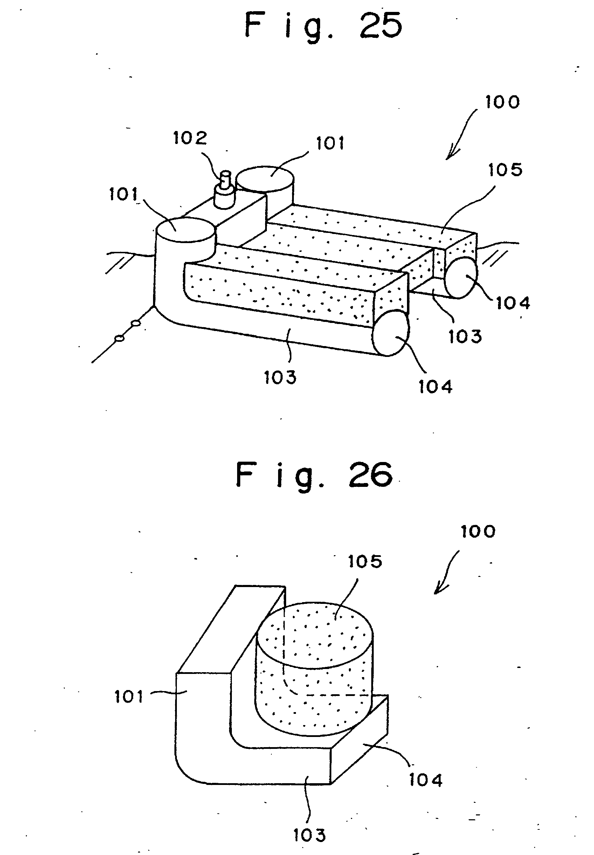

Prior BBDBs are shown in Figs.23-25. An old floating type wave power generating apparatus ( Backward Bent Duct Buoy; BBDB) 100 is shown in Fig.23. An air chamber 101 is the first studied BBDB, where an air chamber 101 and a horizontal duct 103 are connected. An open mouth 104 opens at the rear end of the horizontal duct. A float 105 is a box shape, and the float 105 supports the BBDB around water surface 110. A reference numeral 102 is an air duct for output of air. Fig.24 shows a single fuselage BBDB, and a twin fuselage BBDB is shown in Fig.25. Reference numerals in Figs.24-25 are the same as those in Fig.23. A reference numeral 106 shows a mooring rope. The study was continued later and many water tank laboratory tests and sea tests were conducted not only in Japan but also in China, India and Denmark.

The backward bent duct buoy (BBDB) improved remarkably the specific air pressure ratio which means a ratio between air pressure in the air chamber and a wave height, as compared to a usual floating type wave power generating device. Five BBDBs shown in Fig.25 are put to practice for navigation use in the South China Sea.

Many water tank tests in respect to the float shape were repeated. A relationship between the buoy shape and the air output will be explained below. In the first place; after study of the float shape that was shown from Figs. 23-25, the float shape was changed as shown in Figs.26-28. The shape of float 105 of the floating type wave power generating apparatus 100 changed to a vertical cylinder shape, and the air power was improved not only in short period of buoy's vertical oscillation period (short period), but also the water column oscillation period in the duct (long period), and the useable period of bandwidth is extended significantly by two peaks compared to float shape shown in Figs. 23-25 before.

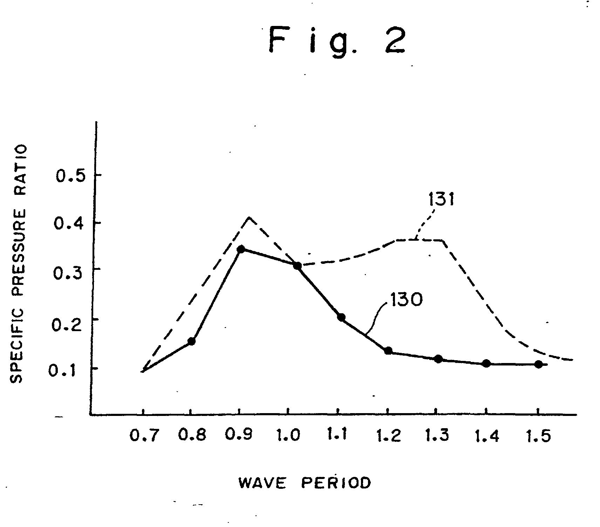

The box shape float wave power generating apparatus shown in Fig.23 and the vertical cylinder float wave power generating apparatus shown in Fig.26 were compared in relation between the wave period and the air pressure ratio in the air chamber. The result is shown in Fig.2. A curve 130 in full line shows a relationship between the air pressure ratio and the wave period for box shape float of fig.23. The curve 131 in dotted line shows the same for the vertical cylinder float of Fig.26. The reason of higher air pressure ratio at the long period of wave for the vertical cylinder float is that stability against a pitching motion becomes smaller according to a difference of a float shape, a pitching period becomes long, the water column oscillation is induced resonantly, and the air output increases. This shows that float shape gives a possibility to increase conversion efficiency in wave's wide band width.

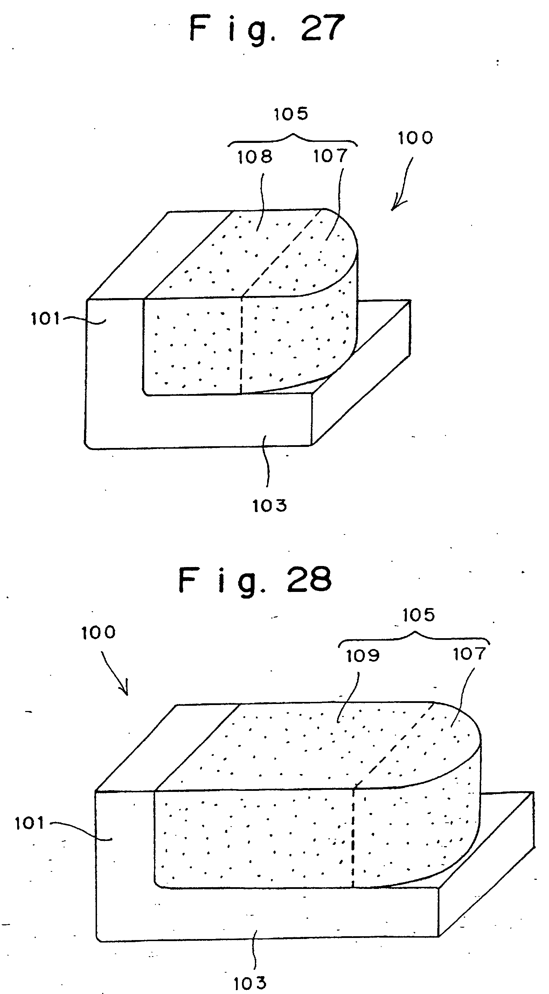

Next, as shown in Fig.27,the front part half cylinder of the float 105 is changed to a vertical rectangle pillar 108, and rear part being the same half cylinder 107 is adopted, as the float. The vertical rectangle pillar 108 has a length along the axis of the horizontal duct 103 being equal to the radius of the cylinder of Fig.26, and a width being equal to the buoy's width. The vertical rectangle pillar 108 of the float 105 is changed into a vertical square pillar 109 as shown in Fig.28. The vertical square pillar 109 has equal dimensions in width and length. The general merit of this buoy shape as shown in Fig.28 is that the drag force may be low, that such buoy may be designed easily into large volume and that the generate power may be very high. The generated power may be represented in a captured width x which means a generated air output being equivalent to the wave power in x times of the buoy width. Water tank tests of models shown in Figs.27 and 28 gave a captured width 1.2-0.6 for a vertical rectangle pillar and rear half cylinder float (Fig.27), but 2.0-1.0 for a vertical square pillar and rear half cylinder float (Fig.28).

In order to progress utility of this floating type wave power generating apparatus for power of island and land, water tank tests were repeated with small models and large models in respect to float shapes and duct shapes, and sea tests were done in several times. Apparatus according to the present invention was devised based upon scientific knowledge obtained by these tests.

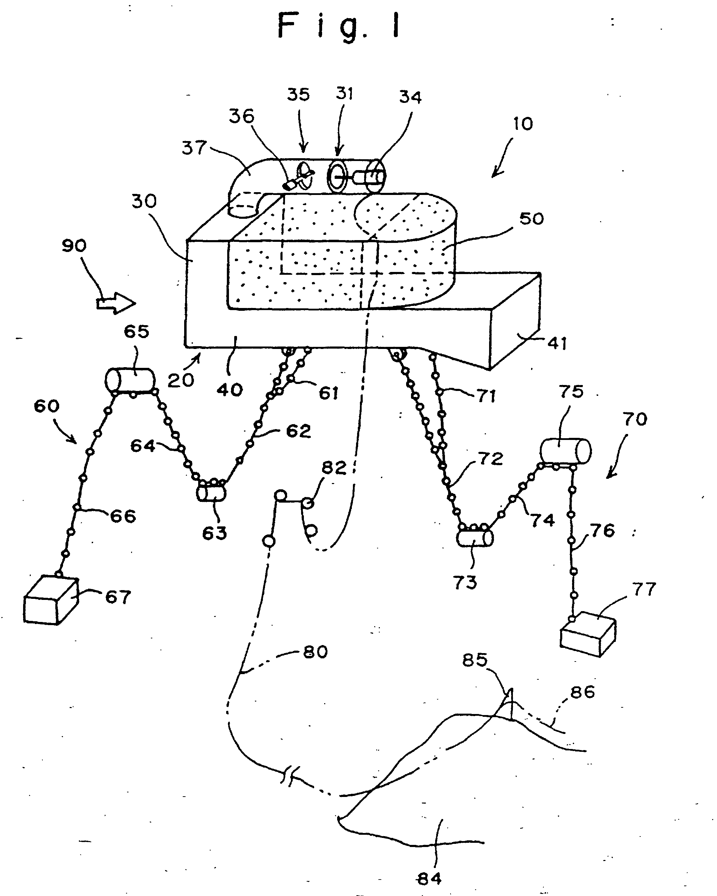

Fig.1 shows a total perspective view of practical use of the present inventive backward bent duct buoy (BBDB). The float 50 of the floating type wave power generating apparatus 10 is composed of a vertical square pillar (float width: float length = 1 : 1) and a vertical rear half cylinder attached to the square-pillar. A frontward mooring apparatus 60 is composed of a forked chain 61, a frontward chain 62, a weight 63, a chain 64, a front float 65,a chain 66 and a front mooring concrete anchor 67. And a rear mooring apparatus 70 is composed of a rear forked chain 71,a chain 72, a weight 73, a chain 74,a rear float 75, a chain 76 and a rear mooring concrete anchor 77. The BBDB floating float 50 in the wave power generating apparatus 10 is moored by the frontward mooring apparatus 60 and the rear mooring apparatus 70 at minimum.

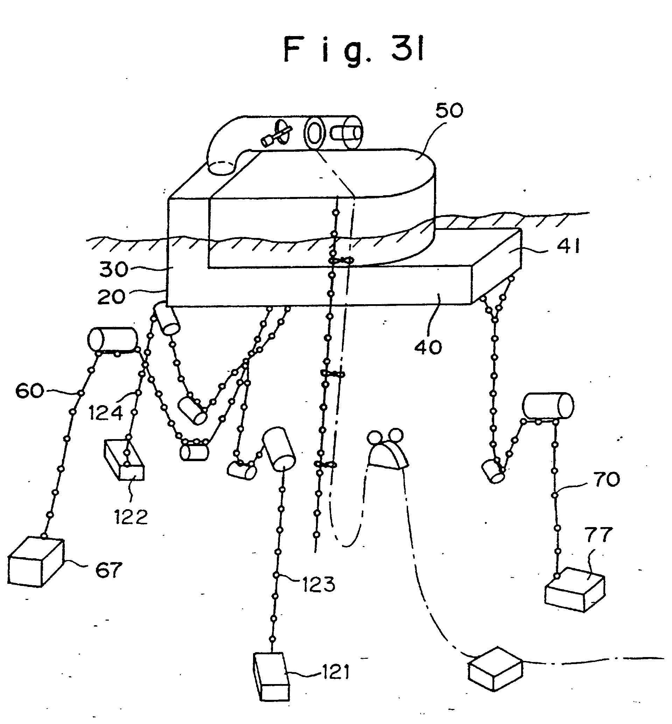

A terminator type wave power generating apparatus may be moored by two mooring apparatus since the terminator keeps a perpendicular direction against the wave's direction which is parallel to shoreline in the near shore, while an attenuator type wave power generating apparatus needs four mooring apparatus to keep an attenuator to follow the wave direction as shown in Fig.31.

The backward bent duct buoy (BBDB) comprises a front vertical duct 30 being an air chamber and a horizontal duct 40. In this embodiment, the L-shaped duct 20 of vertical bottom is bent to the horizontal direction, the horizontal duct 40 is extended about 0.5 times of the air chamber width from the end of the float rear end to the rear direction, and the duct opening 41 opens duct to the sea water. And an air duct 37 is installed on the air chamber room.

An open and close valve 35 is installed in the air duct 37. The open and close valve 35 is driven by a open and close servo motor 36, so that air flow is opened or closed. There is an impulse turbine 31 and an electric generator 34 in the air duct 37. The impulse turbine 31 has the open and close guide vanes in front and rear of the rotor of the turbine to rotate the turbine rotor in the same direction in an alternative air flow. The same function is obtained to use four valves or a Wells turbine. The impulse turbine rotates the electric generator 34 through the air turbine 31, and generates the electricity.

The electric power cable 80 has flexible characteristic, and it is connected to the grid line 86 through an engage device 85 that is attached to a sea bottom ground 84. The electric power cable 80 has a float 82 in the mid portion of the cable, and an S-shape of the cable may decrease cable motion caused by the wave.

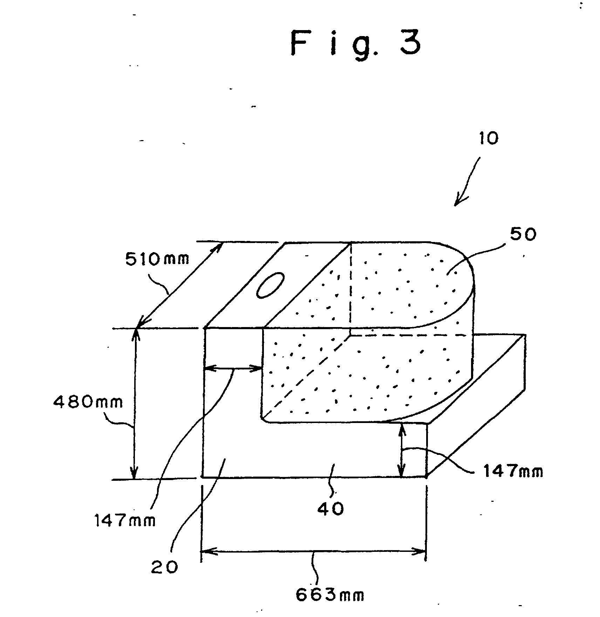

Fig.3 shows dimensions of a float model. This float model 50 is 510mm in the width, 510 mm in the length (the length along the axis direction of the horizontal duct), that is, length/width=1, the vertical height of backward bent duct is 480 mm, the horizontal length is 663 mm, the width is 510 mm, and the inside dimension of duct is 147 mm. Fig.3 shows the same float model shown in Fig.27.

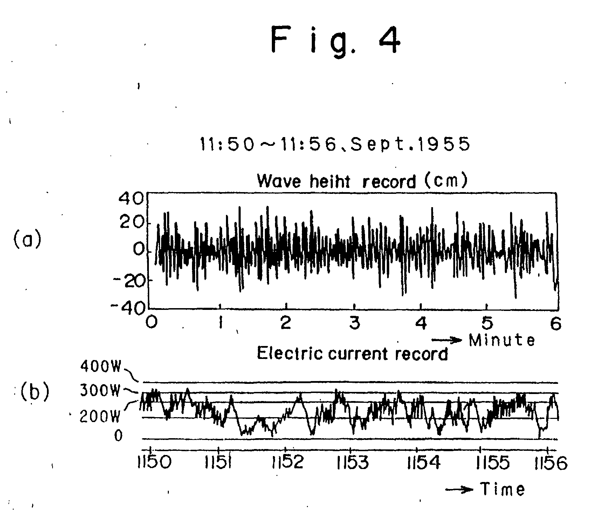

After the water tank test, the floating type wave power electric generating apparatus was tested on Mikawa Bay in BBDB buoy of similar figures to Fig.3. The buoy is 2.86 m in length, 2.2 m in width, 2.5 ton in weight. As shown in Fig.4 (a), a wave record of Mikawa Bay (The Inland Sea) was Hs=45 cm, Ts=2.9 sec. By this wave, an electric current record shown in Fig.4 (b) was obtained. An electric output was shown in table 1, and the maximum electric output Pmax was 350 watt, the average electric output was 174 watt.

Table 1

| H 1/3 (cm) | T 1/3 (sec) | H max (cm) | T max (sec) | H mean (cm) | T mean (sec) | numbers of wave |
|---|---|---|---|---|---|---|
| 45 | 2.9 | 66 | 3.0 | 29 | 2.6 | 224 |

According to a Froude simulation law, the 10 times larger buoy by 10 times larger wave is estimated. The 10 times larger BBDB is 28.8 m in length, 22 m in width, 15 m in height, 500 tons in weight. Wave is Hs=4.5 m, Ts=9.1 sec. According to a Froude simulation law, a maximum electric output is estimated as Pmax = 1,100 KW, and a mean electric output as Pmean =550 KW. This is an estimation in very high wave area such as offshore of Ireland etc. If the wave height is half such as India and Japan, Pmax= 275 KW, Pmean = 137KW are estimated. As described so and so, BBDB that has the same float shape of Fig.3 was studied in water tank.

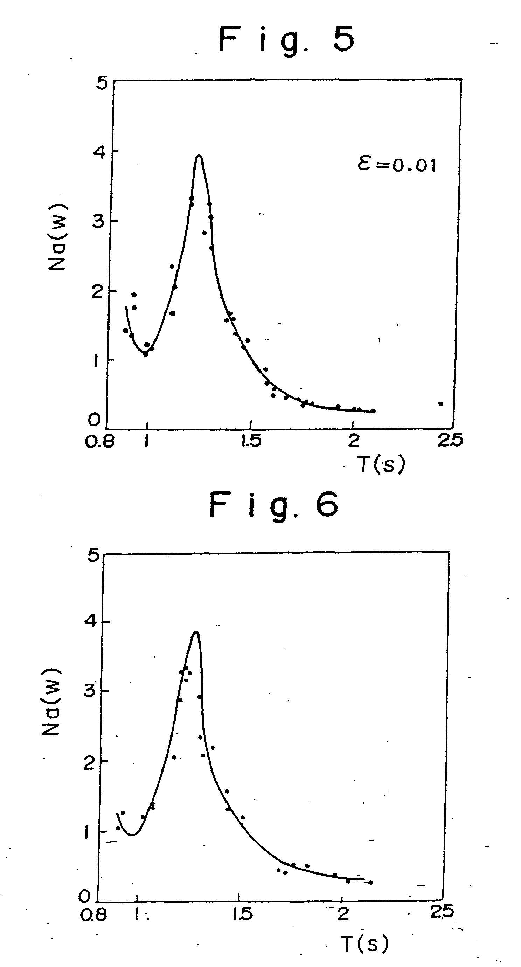

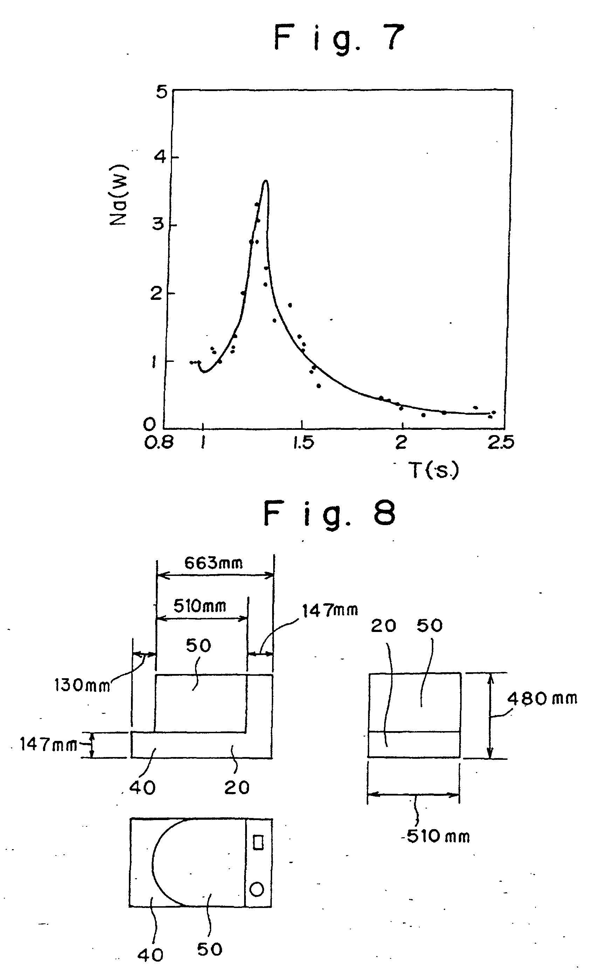

As shown in Figs.5-7, a relationship between a wave period Ts and an air output Na is obtained as test results using the model of 663 mm in length, 510 mm in width (float length/float width=1.0), and height of 480 mm. Fig.5 is in case of a model weight of 24 Kg, Fig.6 is in case of a model weight of 27 Kg, Fig.7 is in case of a model weight of 30 Kg. In this test, the wave was 0.1 m in height.

The wave period was from 0.8 sec to 2.1 sec, a nozzle throttle ratio was 0.01, the air output was indicated by watts, and power output was influenced by weight of the floating type wave power generating apparatus. The output was influenced by weight and wave period as shown in table 2.

Table 2

|  |  | (Watts) | | | |
|---|---|---|---|---|---|
| Wave period | | 1.0s | 1.25s | 1.5s | 1.75s |
| condition | Extended duct length=0 mm Weight = 24 Kg. | 0.92 | 3.95 | 1.0 | 0.4 |
|  | Extended duct length =0 mm weight=27Kg. | 0.95 | 3.82 | 1.05 | 0.45 |
|  | Extended duct length = 0 mm Weight = 30Kg. | 0.85 | 3.72 | 1.05 | 0.5 |

Fig.8 shows a horizontal duct of the backward bent-duct 20 extended 130 mm (0.25 times of width of float) from the rear end of the float 50.

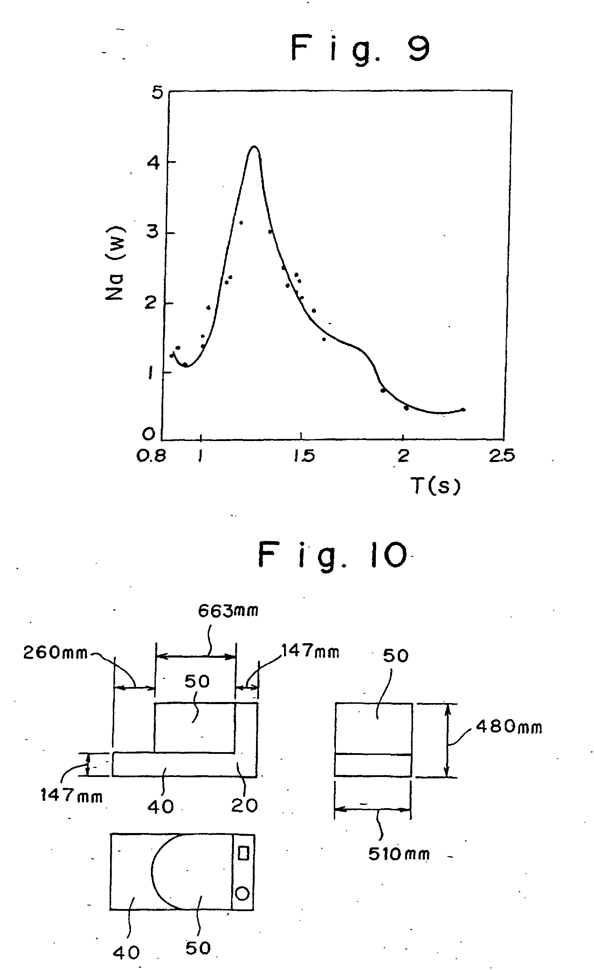

At that time, the air output in particularly long wave period is shown in Fig.9. Buoy's size is the same as the buoy in Fig.8, but the horizontal duct of the backward bent duct 20 is extended 260 mm ( 0.5 times of float width ), air output in the model test was improved significantly as shown in table 3.

Table 3

|  |  | (Watts) | | | |
|---|---|---|---|---|---|
|  | Wave period | 1.0s | 1.25s | 1.5s | 1.75s |
| Condition | Extending length =135 mm Buoy length=663mm | 1.1 | 4.2 | 1.8 | 1.2 |
|  | Extending length =260mm Buoy length=663mm | 1.1 | 4.6 | 1.86 | 1.6 |

As is clear in tables 2 and 3, by extending 130 mm (about 0.25 times of. the float width ), 260 mm (about 0.5 times of the float width) of the duct length, air outputs increased 21 % in peak, and 4 times in long wave period (1.75 sec) respectively.

As a float shape, the changing history is explained referring to Figs.26-28. At first, a vertical cylinder float in fig.26 was tested. The float 105 in Fig.27 has a rectangle pillar 108 which has a length along the axis of the horizontal duct of 0.5 times of the width (same to the radius of the cylinder in Fig.26), and the width of the rectangle pillar is the same to the diameter of the cylinder. In the rear part of the rectangle pillar a half cylinder is attached as shown in Fig. 27. Fig.3 shows the same with detailed dimensions. In this shape, the total float length/ the float width =1.0.

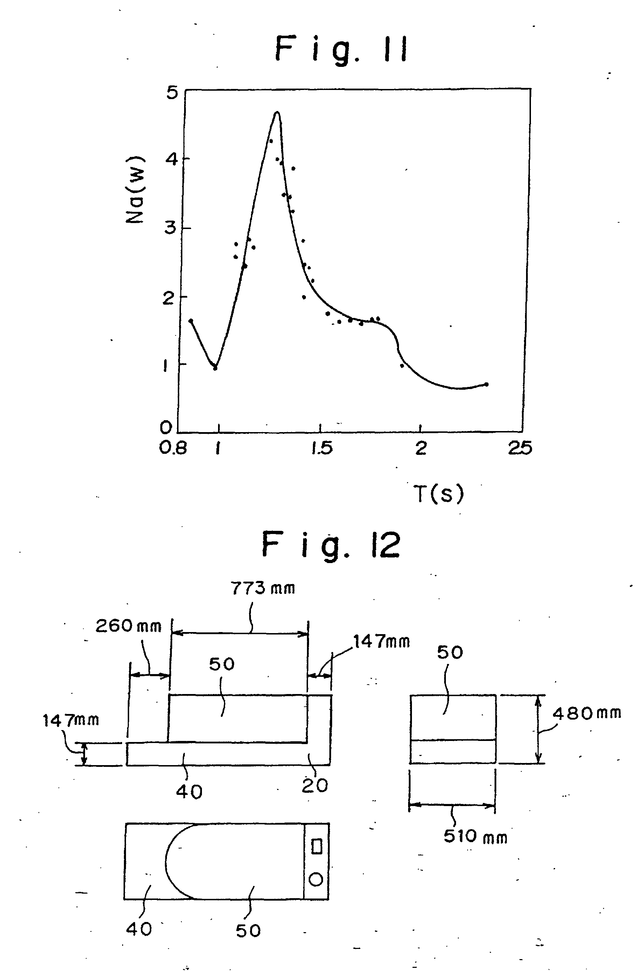

Next, this float 105 was changed to extend the float length as shown in Fig.28. Fig. 12 illustrates dimensions thereof. The float length 773 mm, float width 510 mm, and the float length/width =1.52 was adopted. In addition, the horizontal duct is extended 260 mm (about 0.5 times of the buoy width) from rear end of the float.

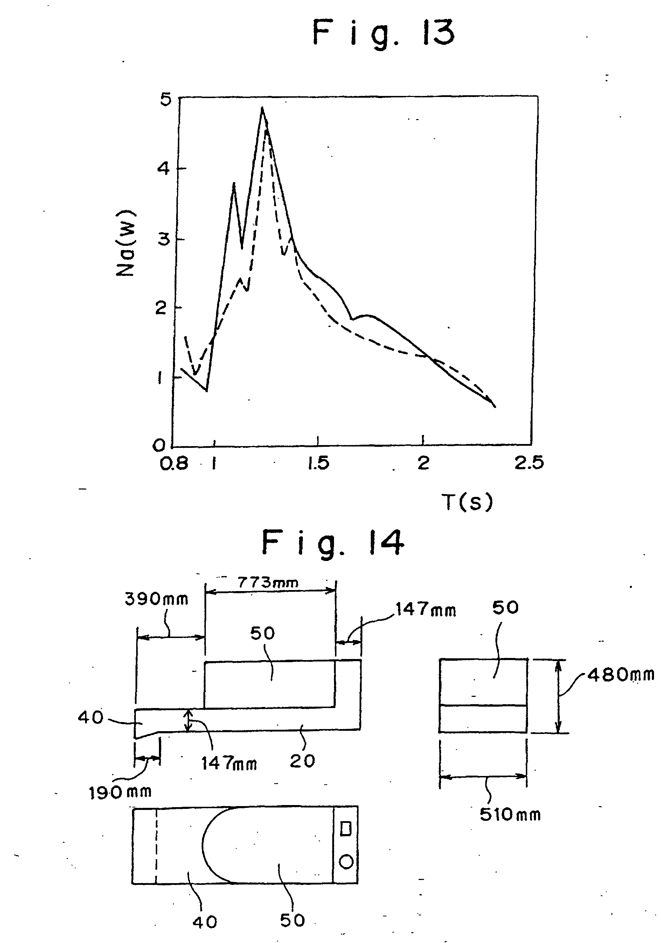

As the result, the air output by 0.1 m wave height was obtained as shown in full line in Fig.13. The comparative air output by a rectangle pillar and rear half cylinder float shown in Fig.10 was obtained as shown in dotted line in Fig 13. And, comparison is also shown in table 4.

Table 4

| | | (Watts) and ratio | | | | | |
|---|---|---|---|---|---|---|---|
| wave period | | 0.95s | 1.05s | 1.2s | 1.5s | 1.75s | 2s |
| Condition | Square and A Rear Half Cylinder Float (823mm) | 0.8 | 3.8 | 4.9 | 2.4 | 1.9 | 1.4 |
| | Rectangle And rear Half cylinder Float (663mm) | 1.3 | 2.0 | 4.8 | 2.0 | 1.5 | 1.1 |
| | Square/ Rectangle | 0.61 | 1.9 | 1.02 | 1.2 | 1.23 | 1.27 |

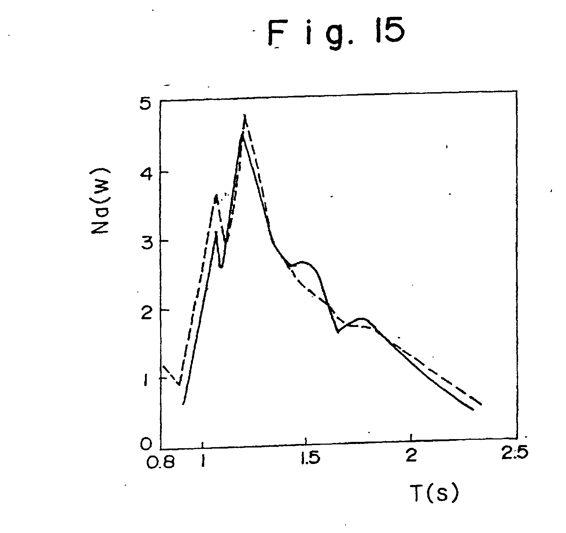

According to table 4, a float shape of a vertical square pillar and a rear half cylinder, length/width=1.52 makes the air output higher 1.9-1.2 times. However, when a float shape is changed as shown in Fig.14, the horizontal duct is extended 390 mm (0.76 times of float width), and wave is 0.1 m in height as shown in full line in Fig 15, the air output is almost the same as that of dotted line shown in Fig.13 for the model of Fig.12. The extending effect of the horizontal duct is not recognized in this over extending. As above mentioned, a suitable float shape and a horizontal duct shape, efficient electric power generation is obtained in wide wave periods. Particularly, more efficient electric generation including long period wave becomes possible.

As above mentioned, even a float shape composed of a rectangle pillar and a rear half cylinder, as shown in Fig.4, electric generation with better efficiency be obtained, and a prospect to get an economical large wave power electric generation is obtained. In addition, by improvement of the BBDB shape, 1.5 times-2.0 times (4 times in long wave period) power improvement becomes to be possible.

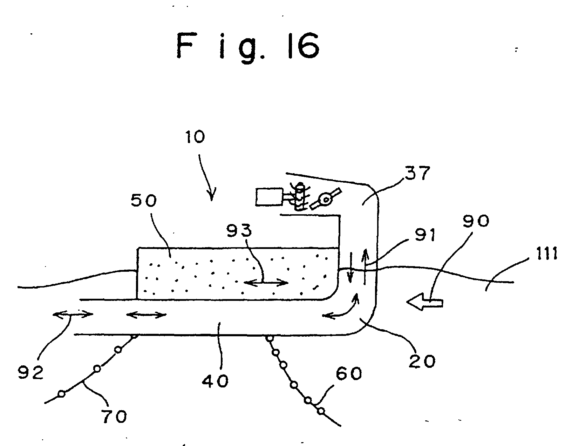

Next, an effect of the present invention for mooring of the floating type wave power generating apparatus will be described. As shown in Fig.16, the floating type wave power generating apparatus 10 is moored by a front mooring apparatus 60, and a rear mooring apparatus 70 and some other direction mooring apparatus against wave and current forces. The backward bent duct 20-is composed of a vertical air chamber duct and a horizontal duct. The vertical air chamber is connected with the horizontal duct 40 by bending 90 degrees. The horizontal duct opens at the rear end to the sea water. The water column motion 91 in the vertical air chamber and the backward bent duct 20 generates a horizontal water motion shifting bent duct, and the duct water current 92 is exhausted through the opening of the duct. In this time, the surging motion 93 of the floating type wave power generating apparatus operates. The oscillating water column through the bent duct produces a reaction force (frontward thrust force) by changing direction from vertical to horizontal. It is calculated as follows.

$$Fv= - \rho Ae(Vx-Ve)^2 \qquad\qquad (1)$$

where,

Fv: reaction force Kgm/sec$^2$ (frontward thrust force)
$\rho$ = sea water unit weight = 1,030 Kg/m$^3$
Ae= sectional area of the duct m$^2$
Ve= speed m/s of the water flow in the duct 92
Vx= speed m/s of surging motion 93.

In the water tank tests, in most of wave periods, frontward thrust force was observed. This is one of the advantages of devices according to the present invention, and this characteristic is the basic feature to keep safety of mooring for the BBDB.

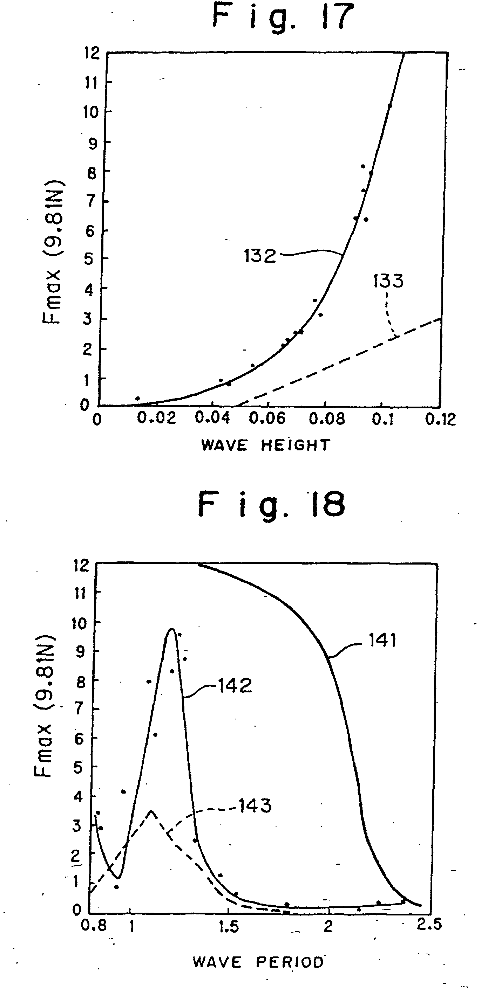

As shown in Figs.17 and 18, water tank mooring tests using BBDB model (510 mm wide,663 mm long with 260 mm extended duct) were done. There were 3 different test conditions. Condition A is frontward mooring, that is, a BBDB is moored in opposite direction which the vertical air chamber is located in rear end, and the open mouth of the horizontal duct is located in front of the buoy. In all wave periods from 0.8 sec to 2 sec, the mooring force (Fmax) by 0.1 m wave was over 10 kg, as shown by a curve 141 in Fig.18, which is high in all wave period. Condition B is backward mooring with relatively short chain use. Condition C is backward mooring with relatively long chain use. Comparing conditions B, C to the condition A, in long wave period (longer than 1.5 sec), the mooring force (Fmax) becomes to zero, as shown by curves 142 and 143, and BBDB's frontward moving against wave was observed. (Wave height in long wave period is usually high, and mooring force is usually very high.)

As shown in the condition B (a curve 142), the mooring force increased to maximum 9.5 kg at 1.25 sec of wave period which is the vertical heaving oscillation period.

Peak mooring force decreased-from the condition B to the condition C (a curve 143) by soft mooring, where a ration of chain length to water depth L/H is 3.46 in condition B, and the ratio was changed to L/H =6 in the condition C, and then the peak mooring force was decreased to 1/3 .

As shown in Fig.17, the maximum mooring force (Fmax) against wave height is at heaving resonance period (1.25 sec), and as shown in Fig.18 the maximum mooring force (Fmax) against wave period is by 0.1 m wave height. It is confirmed by water tank tests that there is a big mooring force difference. Fig.17 shows tested value in a condition of the throttle ratio =0.01,T=1.17s, Lc=0.136 m, and L/h =3.46.

As shown in Fig.17 of the maximum mooring force against wave height, the mooring force of a square pillar and rear half cylinder float with relatively tight mooring (L/H=3.46) is shown by a curve 132. The mooring force increases in square of wave height at short period resonance (1.25sec). The mooring force by wave height of 0.1 m, and wave period of 1.25 sec was 9.8 kg.

The other hand, the mooring force with a soft mooring (L/H=6) is shown in dotted lines (curves 133 and 143) in Figs.17 and 18. The mooring force is proportional to wave height and not square of wave height as shown by curves 132 and 142. The mooring force at the wave height 0.1 m and wave period 1.1 sec decreases to 3.5 Kg, corresponding to 1/3 of the curve 132. These big difference of mooring force is produced by frontward pushing force by inner water duct's motion represented by $(Vx-Ve)^2$. The soft mooring includes a long chain or a short chain with a mid float. An air output difference is produced likewise at-the same time. Decrease of the mooring force and increase of the output will owe the same reason.

According to the Froude law, the mooring force varies directly as cube of a representative dimension. When the scale ratio is 43, the mooring force of a large floating apparatus of 28.6 m long, 22 m wide of a rectangle pillar and half cylinder float is estimated as 9.8 Kg $x(43)^3$=780 ton, by very high wave of 7.7sec of wave period, 4.3 m of wave height, which is very high mooring force.

When the buoy shape is changed under the same conditions to a square pillar and half cylinder, the maximum mooring force is estimated as 3.4 Kg x $(43)^3$ =270 ton, decreasing remarkably.

When the scale ratio is 25, and BBDB is 16.6 m long and 12.7 m wide, a square pillar and half cylinder float will have 55 ton of mooring force by wave period of 5.9 sec,2.5 m of wave height. Even wave height is 5 m; The maximum mooring force is estimated as 110 ton, which gives safe mooring.

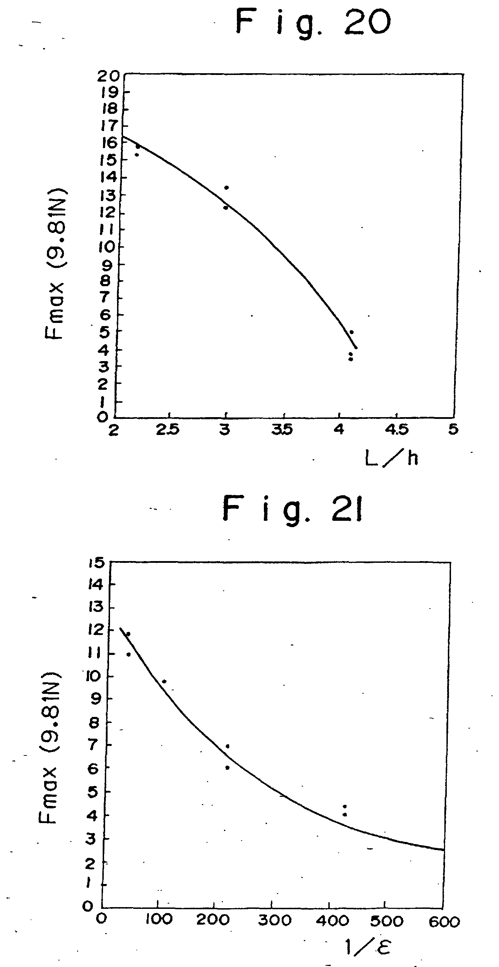

Designing of the soft mooring system may increase safety of mooring. The soft mooring is obtained using long chains. Assuming a chain length is L, a water depth is h, then L/h needs over 6 for the soft mooring. Fig.20 shows a relationship between Fmax and L/h. When long chain is used, possible installation numbers of wave power generating apparatus per shore length will be limited. For example, the KAIMEI wave power device(80 m long) was moored by 5 long chains-, and each chain being 250 m in length, and so every 500 m interval per one Kaimei was necessary. It is not desirable to use 500 m intervals for a future actual design. Accordingly, as shown in Fig.1, combination of a float, a short chain and a weight is useful for mooring of BBDB in soft condition with a very short chain in length, which allows increasing wave power apparatus installation numbers per shore length. According-to the water tank test for short chain with float, it is concluded that the mooring system may decrease the mooring force to 1/8 against long chain mooring. The mooring system with short chain with a small float may keep safety of mooring.

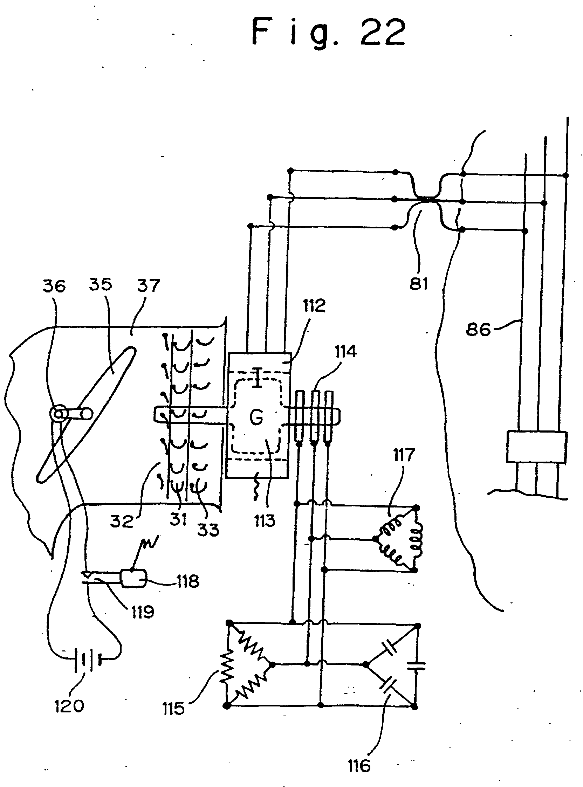

Another matter for the mooring system is shown in Fig.21. When a throttle ratio $(1/\varepsilon)$ of the sectional area of the air duct becomes 1/400-1/600, namely, when an opening of the air duct is closed, the mooring force (Fmax) is decreased, which promotes further safety of mooring.

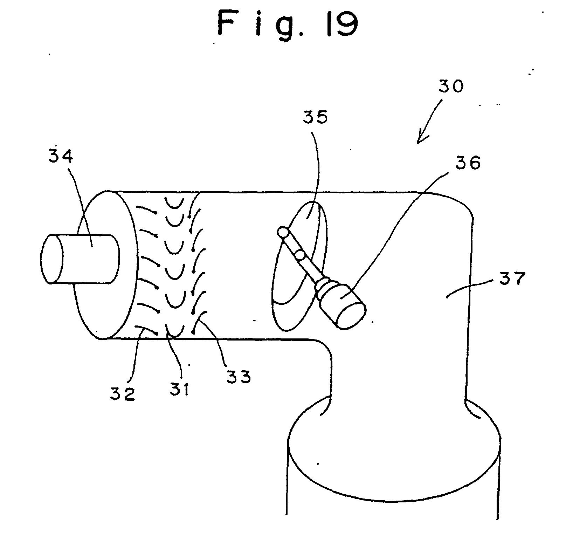

The open and close valve of 35 is shown in Fig.19. The valve mechanism 35 in the air duct 37 attached on to the air chamber is shown in Figs.1, 16, and 9.

Next, a turbine and a generator are explained referring to Fig.22. According to embodiments of the present invention, the open and close guide vanes are attached in front and rear of impulse turbine blade 31. This turbine is called Setoguchi Turbine which was developed by Prof. Setoguchi, Saga University, Japan. The other turbine with the impulse turbine with four valves is useable. The Wells turbine was adopted as the best candidate so far, but a stalling characteristic of the Wells turbine -decreases the turbine efficiency in high wave condition, while an impulse turbine is useful to improve this point.

The closing of the open and close valve 35 is not only effective for the safety of the turbine in very high wave, but also useful to decrease mooring force. Controlling of the open and close valve 35 is operated by a servo motor 36, through a receiver 118,a contact 119 and a battery 120 from land, or an automatic order by the turbine speed etc.

Next, as a generator, the wound type induction generator is used. 3 phases of the rotor 113 are taken through a brushing 114.Using a resistor load 115, a capacitor load 116, induction coil load 117.an electric power of the constant cycle, the constant voltage is generated, Therefore, it can be connected to a grid power 86 through a cable 81. Improving air turbine and generator as above mentioned, the floating type wave power generating apparatus can increase it's economy and it's utility significantly.

The above mentioned explanation was mainly for an attenuator type wave power generating apparatus which is suitable for power of islands of small capacity (100 KW-200 KW class ). For land power source, much larger power capacity (1,000 KW-2,000 KW or much larger KW class) is desirable. For this purpose, the terminator type wave power generator which has a long sideward float at right angle to wave direction is desired.

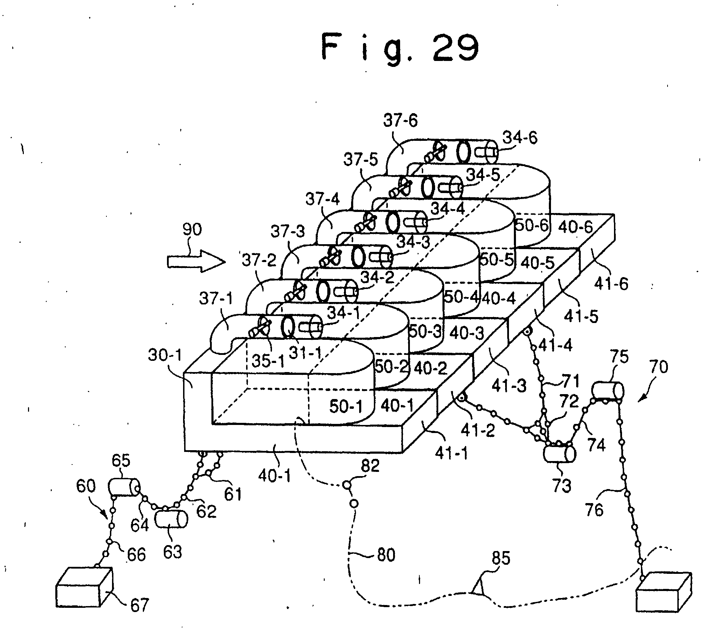

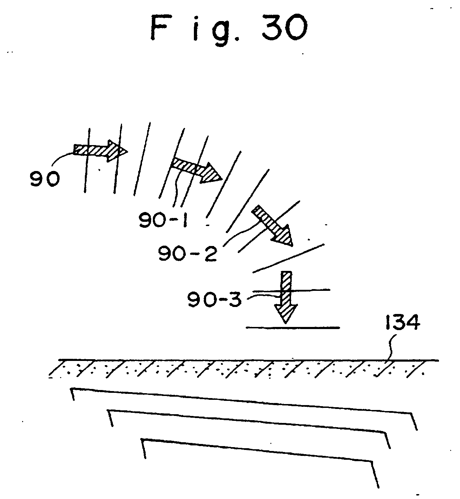

Fig.29 shows a whole perspective view of a terminator type wave power generating apparatus. Floats 50-1, 50-2, 50-3, 50-4, 50-5, 50-6 are each composed of a vertical square pillar and a rear half cylinder. These floats are fixed to each other. As shown in Fig.30, wave changes flowing direction to right angle against shore in near shore as shown in wave direction 90, 90-1,90-2,90-3. The top of wave is laid in parallel to the shore line in shallow water by change of wave direction owing to a natural characteristic of wave. A laterally wide terminator float has a tendency to keep its posture as the front line becomes parallel to wave ridge that is at right angle to the wave direction. In near shore, water current has a tendency to run in parallel to shore line, and wave ridge also has a tendency to be parallel to shore line.

For each air chamber 30-1, air ducts 37-1,37-2,37-3,37-4,37-5 and 37-6 introduce the air to the turbines 31-1 to 31-6 and rotates generators 34-1,34-2,34-3,34-4,34-5 and 34-6. There is an open and close valve 35-1 from each air chamber 30-1. The horizontal ducts 40-1,40-2,40-3,40-4,40-5 and 40-6 open to backward, the floats 50-1,50-2,50-3,50-4,50-5 and 50-6 show a vertical square pillar and a rear half cylinder or a vertical rectangle pillar and a half cylinder. Since captured width of float is 2-1 by regular waves, but for random waves, captured width decreases to 0.5 of regular waves, and it may absorb 100% of wave power which comes in terminator's width. The terminator type BBDB will be practical to use all wave power which comes in all width of a laterally wide terminator.

The terminator is moored from a front and a rear by short chain float and weight from the anchor, in addition, a cable is laid to the shore through a floating cable 80 and a ground cable 85.

A front mooring apparatus 60 is composed of a front anchor 67, a float 65, a short chain 54,a weight 63, a short chain 62,a forked chain 61. A rear mooring apparatus 70 is composed of a rear anchor 77, a short chain 76,a float 75, a short chain 74,a weight 73,a short chain 72, and a forked chain 71. With the two chain lines, the terminator is moored in right angle to the wave direction 90.

The float of the floating type wave power generating apparatus so far has changed to a vertical square pillar and a rear half cylinder. The extending bent duct improves electric power output in about 1.5-2 times, and it makes possible to get economical electric power generation. The floating type wave power generation of the present invention has bent duct in 90 degrees, oscillating water motion in the duct produces frontward thrust force to decrease the mooring force, and safety mooring is secured. And combination of a short chain and a float increases wave power generation in limited width of shore. And, the electricity is transmitted through a flexible cable with a constant cycle and a constant voltage to the grid on land. Wave power capacity can be increased 10 times by adaptation of the terminator.

This characteristic is not seen in any other terminator such as Dr. Stephen Salter's duck buoy, SEA (Sea Energy Associates, Ltd., U. K.) clam buoy or else which has long sideward length, but no backward bent duct. Wave impact force to a wide sideward buoy produces very high force, and mooring becomes to be difficult. There is no terminator buoy which was moored in very high sea condition. The reason of no practical test may come from problems to high mooring force of the terminator. The present invention solved this problems by frontward thrust force produced by L-shaped duct. As a conclusion, power cost by the terminator can be decreased remarkably according to the present invention.

The attenuator float is moored with a front elastic characteristic mooring apparatus 60,and a rear elastic. characteristic mooring apparatus 70 as illustrated in Fig.29. Fig.31 shows a multi point short chain mooring system for an attenuator.

The attenuator buoy 50 is moored with a front anchor 67,a rear anchor 77,a left side anchor 121 and a right side anchor 122 through a front mooring apparatus 60, a rear mooring apparatus 70, a left mooring apparatus 123 and right mooring apparatus 124. An attenuator buoy follows to wave direction by 3 chains in front, and a soft rear chain. The attenuator's direction follows to wave direction . And 4-5 chain lines are necessary for the attenuator. In KAIMEI Sea test, 4 long chains in front and one long chain in rear were used to follow to wave direction. Number of chain lines may be decreased to two for the terminator, but 4-5 lines are necessary for the attenuator.

As mentioned above on the attenuator type floating type wave power generating apparatus, the backward bent duct buoy produces a frontward thrust force and a high air output. Particularly, when float shape is adopted with a vertical - square pillar and a rear half cylinder and with extending duct length to rear direction from end of float about 0.5 of float's width, generation of electric power may be increased, and decreasing of mooring force is obtained.

## Claims

1. A wave power generating apparatus (10) comprising;
   a L-shaped duct (20) comprising an upright extending duct (30) fluidly connected with a laterally extending duct (40) having an open rear end (41),
   a turbine (31) and an electric power generator (34) on an air chamber (37) located on the upright extending duct,

mooring front and rear chains (60, 70),

and a float (50) fixedly attached to said L-shaped duct (20), **characterised in that** the float comprises, in one body, an upright square pillar and an upright rear half cylinder.

2. A wave power generating apparatus (10) according to Claim 1 wherein the apparatus is of attenuator shape and the mooring front and rear chains keep the apparatus (10) in parallel to follow the wave direction in all weather conditions, without turn.

3. A wave power generating apparatus (10) according to Claim 1 of a terminator shape comprising;

a plurality of L-shaped ducts (20) each comprising an upright extending duct (30) which is fluidly connected with a laterally extending duct (40) having an open rear end (41),

a plurality of floats (50) fixedly attached respectively on to said laterally extending ducts (40), each float comprising, in one body, an upright square pillar and an upright rear half cylinder,

turbines (31) and electric power generators (34) on air chambers (37) located on the upright extending ducts,

said air chambers (37), said ducts (20) and said floats (50) fixed together as a buoy, whereby the apparatus may gather wave power distributed in wider width of wave front, and the front line of the buoy may be kept parallel to a shoreline with two chain lines at minimum, and

the mooring front and rear chains (60, 70) keep the apparatus (10) in parallel to the shore line in all weather conditions, without turn.

4. An apparatus (10) according to any of Claims 1 to 3, wherein said laterally extending duct (40) is further extended from the end of the float at 0.4 - 0.6 times of the width of the air chamber.

5. An apparatus (10) according to any of Claims 1 to 3, wherein said L-shaped duct (20) is provided with a 90 degrees bent duct which produces frontward pushing force by return trip of water motion in the duct to decrease mooring force, and an automatic valve (35) in the air outlet (37) which decreases mooring force by closing in very high wave condition.

6. An apparatus (10) according to any of Claims 1 to 3, wherein the wave power generating apparatus is moored with short chains being shorter in length- than 3 times of the water depth and being provided with middle floats attached between an anchor and the wave power generating apparatus (10) in order to mitigate shock force in the chain line and to decrease mooring force.

7. An apparatus (10) according to any of Claims 1 to 3, wherein

said turbine is an impulse turbine to prevent the stall problem of the turbine in high wave and provided with an open and close valve (35) in an air duct (37) to control turbine speed, and

said generator (34) is an induction generator with a resistor and a capacitor for control to generate the constant cycle and constant voltage electric output from variable speed of the turbine (31) and provided with a flexible power cable through which electricity is transmitted from the generator to the grid line (86) on the land.

**Patentansprüche**

1. Wellenenergiegenerator (10), umfassend

eine L-förmige Leitung (20), umfassend eine aufrecht laufende Leitung (30), die in fluider Verbindung steht mit einer seitlich laufenden Leitung (40), die ein offenes hinteres Ende (41) hat,

eine Turbine (31) und einen Generator (34) für elektrische Energie, der über einer Luftkammer (37) auf der aufrecht laufenden Leitung angeordnet ist,

vordere und hintere Kettentaue (60, 70), und

einen Schwimmer (50), der fest an der L-förmigen Leitung (20) befestigt ist, **dadurch gekennzeichnet, dass** der Schwimmer - in einem Körper - eine aufrechte rechteckige Säule und einen aufrechten rückwärtigen Halbzylinder umfasst.

2. Wellenenergiegenerator (10) nach Anspruch 1, wobei die Vorrichtung als Dämpfer gehalten ist und die vordere und hinteren Kettentaue die Vorrichtung (10) parallel halten, so dass sie bei allen Wetterbedingungen ohne Drehen der Wellenrichtung folgen.

3. Wellenenergiegenerator (10) nach Anspruch 1, der als Ende gehalten ist, umfassend

eine Anzahl L-förmiger Leitungen (20), die jeweils eine aufrecht laufende Leitung (30) besitzen, welche in fluider Verbindung sind mit einer seitlich laufenden Leitung (40), welche ein offenes hinteres Ende (41) hat,

eine Anzahl Schwimmer (50), die fest befestigt sind entsprechend an den seitlich laufenden Leitungen (40), wobei die Schwimmer jeweils enthalten - in einem Körper - eine aufrechte rechteckige Säule und einen aufrechten rückwärtigen Halbzylinder,

Turbinen (31) und Generatoren (34) für elektrische Energie auf Luftkammern (37), welche über den aufrecht laufenden Leitungen angeordnet sind,

wobei die Luftkammern (37), die Leitungen (20) und die Schwimmer (50) miteinander zu einer Boje verbunden sind, so dass die Vorrichtung die Wellenenergie innerhalb einer breiteren Wellenfront aufnehmen kann und die Frontlinie der Boje mit mindestens zwei Kettenstrecken parallel zur Küstenlinie gehalten werden kann, und

vordere und hintere Kettentaue (60, 70) die Vorrichtung (10) ohne Drehen bei allen Wetterbedingungen parallel zur Küstenlinie halten.

4. Vorrichtung (10) nach irgendeinem der Ansprüche 1 bis 3, wobei die seitlich laufende Leitung (40) sich weiterhin über das Ende des Schwimmers mit 0,4- bis 0,6-facher Luftkammerbreite erstreckt.

5. Vorrichtung (10) nach irgendeinem der Ansprüche 1 bis 3, wobei die L-förmige Leitung mit einer um 90 Grad gebogenen Leitung versehen ist, welche eine nach vorne gerichtete Druckkraft bei einem Zurücklauf der Wasserbewegung in der Leitung erzeugt, so dass die Vertäuungskräfte kleiner werden, und mit einem automatischen Ventil (35) am Luftauslass (37), welche bei sehr hohem Wellengang die Vertäuungskräfte durch Verschließen mindert.

6. Vorrichtung (10) nach irgendeinem der Ansprüche 1 bis 3, wobei der Wellenenergiegenerator mit kurzen Ketten vertäut ist, welche ein Drittel der Wassertiefe sind und die mit Mittelschwimmern versehen sind, welche zwischen Anker und Wellenenergiegenerator (10) festgemacht sind, so dass sie die Schockkräfte auf die Kettenstrecken mildern und die Kräfte auf die Taue mindern.

7. Vorrichtung (10) nach irgendeinem der Ansprüche 1 bis 3, wobei die Turbine eine Impulsturbine ist, so dass Probleme mit einem Strömungsabriss an der Turbine bei hohen Wellen vermieden werden, und die mit einem Auf-Zu-Ventil (35) in der Luftleitung (37) zur Regelung der Turbinengeschwindigkeit versehen ist, und

wobei der Generator (34) ein Induktionsgenerator ist mit einem Widerstand und einem Regelkondensator, so dass ein konstanter Zyklus und eine konstante elektrische Spannung am Ausgang bei veränderlicher Geschwindigkeit der Turbine (31) erreicht werden, und der mit einem flexiblen Energiekabel versehen ist, durch das der elektrische Strom des Generators zu einer Netzleitung (86) an Land übertragen wird.

**Revendications**

1. Appareil générateur (10) utilisant l'énergie des vagues, comportant :

un conduit (20) en forme de L comportant un conduit (30) s'étendant vers le haut raccordé par fluide à un conduit (40) s'étendant latéralement ayant une extrémité arrière ouverte (41),
une turbine (31) et une génératrice (34) d'énergie électrique sur une chambre à air (37) placée sur le conduit s'étendant vers le haut,
des chaînes avant et arrière (60, 70) d'amarrage,
et un flotteur (50) relié fixement audit conduit (20) en forme de L, **caractérisé en ce que** le flotteur comporte, en un corps, une colonne carrée orientée vers le haut et un demi-cylindre arrière orienté vers le haut.

2. Appareil générateur (10) utilisant l'énergie des vagues selon la revendication 1, dans lequel l'appareil est de la forme d'un atténuateur et les chaînes avant et arrière d'amarrage maintiennent l'appareil (10) en parallèle pour suivre la direction des vagues par toutes les conditions atmosphériques sans tourner.

3. Appareil générateur (10) utilisant l'énergie des vagues selon la revendication 1, en forme de dispositif de terminaison, comportant :

une pluralité de conduits en forme de L comportant chacun un conduit (30) s'étendant vers le haut qui est raccordé par fluide à un conduit (40) s'étendant latéralement ayant une extrémité arrière ouverte (41),

plusieurs flotteurs (50) reliés fixement respectivement aux conduits (40) s'étendant latéralement, chaque flotteur comportant, en un corps, un pilier carré orienté vers le haut et un demi-cylindre arrière orienté vers le haut, des turbines (31) et des génératrices (34) d'énergie électrique sur des chambres à air (37) placées sur les conduits s'étendant vers le haut,

lesdites chambres à air (37), lesdits conduits (20) et lesdits flotteurs (50) étant fixés ensemble en une bouée, grâce à quoi l'appareil peut rassembler l'énergie des vagues distribuée sur une plus grande largeur de front de vagues, et la ligne de front de la bouée peut être maintenue parallèle à une ligne côtière avec au moins deux lignes de chaînes au minimum, et

les chaines avant et arrière (60, 70) d'amarrage maintiennent l'appareil (10) parallèle à la ligne côtière par toutes les conditions climatiques, sans tourner.

4. Appareil (10) selon l'une quelconque des revendications 1 à 3, dans lequel ledit conduit (40) s'étendant latéralement est prolongé davantage à partir de l'extrémité du flotteur de 0,4 à 0,6 fois la largeur de la chambre à air.

5. Appareil (10) selon l'une quelconque des revendications 1 à 3, dans lequel ledit conduit (20) en forme de L est pourvu d'un conduit coudé à 90 degrés qui produit une force de poussée vers l'avant par un ressac du mouvement d'eau dans le conduit afin de diminuer la force d'amarrage, et un clapet automatique (35) dans la sortie d'air (37) qui diminue la force d'amarrage en se fermant dans des conditions de vagues très hautes.

6. Appareil (10) selon l'une quelconque des revendications 1 à 3, dans lequel le générateur utilisant l'énergie des vagues est amarré avec des chaînes courtes dont la longueur est inférieure à 3 fois la profondeur de l'eau, et pourvues de flotteurs médians attachés entre une ancre et l'appareil générateur (10) utilisant l'énergie des vagues afin d'atténuer la force de chocs dans la ligne de chaîne et de diminuer la force d'amarrage.

7. Appareil (10) selon l'une quelconque des revendications 1 à 3, dans lequel

ladite turbine est une turbine à action pour empêcher le problème de calage de la turbine dans une vague haute et pourvue d'un clapet d'ouverture et de fermeture (35) dans un conduit d'air (37) pour commander la vitesse de la turbine, et

ladite génératrice (34) est une génératrice à induction ayant une résistance et un condensateur pour la commande afin de générer le cycle constant et la tension électrique constante en sortie à partir de la vitesse variable de la turbine (31), et pourvue d'un câble souple d'énergie par lequel de l'électricité est transmise de la génératrice à la ligne de réseau (86) située à terre.

# F i g . 1

# Fig. 2

# Fig. 3

10

50

510mm

480mm

147mm

147mm

20

40

663mm

F i g. 4

# F i g. 5

$\varepsilon = 0.01$

# F i g. 6

# Fig. 7

# Fig. 8

# Fig. 9

# Fig. 10

# Fig. II

# Fig. I2

# Fig. 13

# Fig. 14

F i g. 15

# F i g. 16

# F i g. 17

# F i g. 18

# Fig. 19

# F i g. 20

# F i g. 2I

# F i g. 22

# Fig. 23

# Fig. 24

# Fig. 25

# Fig. 26

# F i g. 27

# F i g. 28

Fig. 29

# F i g. 30

90

90-1

90-2

90-3

134

# F i g. 31